# EUROPEAN PATENT SPECIFICATION

(11) **EP 4 766 791 B1**
(45) Date of publication and mention of the grant of the patent: **18.11.2026**
(21) Application number: 24790148.1
(22) Date of filing: 11.09.2024
(51) Int. Cl.: C10G 1/10, C10B 49/14, C10B 53/07, C10G 9/34, C08J 11/12, C08J 11/16

(54) **PROCESS TO CONVERT MIXED PLASTIC WASTE USING A MOLTEN SALT COMPOSITION**
VERFAHREN ZUR UMWANDLUNG VON GEMISCHTEN KUNSTSTOFFABFÄLLEN UNTER VERWENDUNG EINER GESCHMOLZENEN SALZZUSAMMENSETZUNG
PROCÉDÉ POUR CONVERTIR UN MÉLANGE DE DÉCHETS PLASTIQUES EN PRÉSENCE D'UNE COMPOSITION DE SEL FONDU

(30) Priority: 05.12.2023 US 202363606308 P
(43) Date of publication of application: 01.07.2026
(73) Proprietor: Trans Ionics Corporation, Spring, Texas 77389 (US)
(72) Inventor: SCHUCKER, Robert C., Spring, Texas 77389 (US)
(74) Representative: Eisenführ Speiser
(86) International application number: PCT/IB2024/058850
(87) International publication number: WO 2025/120387

(56) References cited:
- CN-A- 115 283 400
- CN-B- 106 861 582
- GB-A- 1 292 177
- US-A- 3 710 737
- US-A- 6 051 110
- US-A1- 2013 256 113
- US-A1- 2017 009 141
- US-A1- 2023 323 222
- JIANG GUOZHAN ET AL: "Molten Solar Salt Pyrolysis of Mixed Plastic Waste: Process Simulation and Technoeconomic Evaluation", ENERGY & FUELS, vol. 34, no. 6, 26 May 2020 (2020-05-26), WASHINGTON, DC, US., pages 7397 - 7409, XP055942431, ISSN: 0887-0624, DOI: 10.1021/acs.energyfuels.0c01052
- TANG YOUCHEN ET AL: "A Versatile Sulfur-Assisted Pyrolysis Strategy for High-Atom-Economy Upcycling of Waste Plastics into High-Value Carbon Materials", ADVANCED SCIENCE, vol. 10, no. 15, 29 March 2023 (2023-03-29), Germany, XP093232198, ISSN: 2198-3844, DOI: 10.1002/advs.202206924

## Description

### CROSS-REFERENCE TO RELATED APPLICATIONS

This application claims priority to and the benefit of U.S. Provisional Application No. 63/606,308 filed December 5, 2023.

### BACKGROUND

### A. Field of Invention

The present invention is directed processes for converting waste plastic feedstock into liquid feedstock streams suitable for use in commercial products.

### B. Background

Waste plastic can be either landfilled or incinerated. However, waste plastic can also be discarded into the environment (rivers and oceans). Only a small percentage of waste plastic is recovered for recycling. However, recycling of plastic waste is gaining momentum as worldwide demands to decrease greenhouse gas emissions increase. Recovery of waste plastic and reconversion to a form that can be blended into virgin plastic streams can reduce the amount of fossil fuel required to meet the ever-increasing production demands of plastic manufacturers.

Currently, there are two primary types of commercial recycling: (1) mechanical recycling, in which plastics are collected, cleaned, remelted and extruded into a form (typically pellets) that can be blended into production lines with virgin plastic; and (2) advanced (or chemical) recycling, which involves the thermal or catalytic conversion of waste plastic to liquids (pyrolysis oil or "pyoil") and hydrocarbon gases. The resulting pyoil can be converted to feedstocks like ethylene and propylene, which are useful in polymer production. However, pyoil conversion can require higher temperatures than temperatures used in advanced recycling. Pyoil conversion can be carried out in (1) fluidized bed catalytic crackers (FCC), which are common to many refineries, or (2) liquid (naphtha) crackers, which are common in chemical plants that produce polyolefins. The products from both FCC and liquid crackers (e.g., ethylene, propylene, benzene, toluene, and other light hydrocarbons) can be used to produce new plastic products that are chemically identical to those made from fossil fuels. Advanced recycling of waste plastics can result in lower greenhouse gas emissions when compared to production of these same plastics from fossil fuels.

Conversion of waste plastic via pyrolysis (either with or without a catalyst) can require temperatures above 350 °C due to the endothermic nature of carbon-carbon bond breakage. Heating of reactors can also be a major problem due to the viscosity of the waste plastic. Some continuous processes use rotary kilns as reactors (e.g., U. S. Patent No. 10,421,911 to William Ullom), which heat the walls of the kiln either electrically or with a combustion flame. This process can be energy intensive; and heat transfer to the reactor walls can be inefficient, resulting in significant loss of heat to the environment. Other reactor systems are batch or semi-batch (as exemplified by U. S. Patent No. 10,131,847 to McNamara et al. and U.S. Patent Application Publication No. 20210371753 to McNamara et al.) and are heated indirectly by electrical heaters. Since the plastic begins the batch cycle as a solid having poor physical contact with the reactor walls, these reactors suffer in that heat transfer can be ineffective, resulting in considerable heat energy being lost to the surroundings. U. S. Patent No. 4,421,631 to Ampaya et al.*,* describes a process for upgrading hydrocarbon material that includes a multi-zone reactor and a molten salt composition that includes elemental carbon. The carbon in the molten salt is combusted with oxygen and the energy created heats the molten salt to higher temperatures. This process suffers in that it, too, is energy inefficient and has the potential to add oxygen to the pyrolysis reactor.

Attempts to improve heating of waste plastics has been attempted. For example, molten salts have been used to heat waste plastic compositions. See, for example, C. Chambers et al., Polymer Waste Reclamation by Pyrolysis in Molten Salts, Ind & Eng Chem Process Des & Dev, 1984, 23, 648-654; H. S. Nygard et al, Review of Thermal Processing of Biomass and Waste in Molten Salts for Production of Renewable Fuels and Chemicals, International Journal of Low Carbon Technologies, 2012,7, 318-324, and Guozhan et al., Molten Salt Pyrolysis of Mixed Plastic Waste: Process Simulation and Technoeconomic Evaluation, Energy Fuels, 2020, 34, 7397-7409). However, these processes suffer from ineffective heating of the molten salt. Other relevant documents with respect to the present invention are: US 2013/256113 A1 pertaining to a MODULAR PLANT FOR PERFORMING CONVERSION PROCESSES OF CARBONACEOUS MATRICES; US 2017/009141 A1 pertaining to MOLTEN SALT PYROLYSIS FOR BIO-OIL AND CHEMICALS; GB 1292177 A pertaining to a METHOD AND APPARATUS FOR CONTINUOUSLY THERMAL CRACKING OF HYDROCARBON IN A HEATING MEDIUM BATH; US 6051110 pertaining to a thermolytic distillation of carbonaceous material; US 3710737 A pertaining to a METHOD FOR PRODUCING HEAT; TANG YOUCHEN ET AL: "A Versatile Sulfur-Assisted Pyrolysis Strategy for High-Atom-Economy Upcycling of Waste Plastics into High-Value Carbon Materials", ADVANCED SCIENCE, vol. 10, no. 15, 29 March 2023; US 2023323222 A1 pertaining to a Method of Treating Pyrolysis Oil From Waste Plastics; CN 106861582 B pertaining to a High-temperature liquid-state nitrate purification and performance enhancement fusing tank; and CN 115283400 A pertaining to an Industrial waste salt three-fluid oxygen-enriched treatment device, system and process.

### SUMMARY OF THE INVENTION

A solution to at least one of the problems associated with processing waste plastic has been discovered according to the process for converting waste plastic into a lower boiling hydrocarbon stream as defined in the claims. The solution can include using an energy efficient reactor. The reactor can be scaled to accommodate the amount of waste plastic to be processed. Notably, the reactor can include a gas distribution apparatus that is capable of delivering a hot flue gas to a molten salt composition, which can disperse the hot flue gas through the molten salt composition to create a heated molten salt composition. Advantageously, as the molten salt composition is heated it liquifies, mechanical stirrers with less horsepower can be used to stir the heated molten salt composition. Yet another advantage is that the use of molten salt compositions allows for the processing of waste plastics that include chloride-containing plastics (*e.g*., polyvinyl chloride (PVC)). Contact of the waste plastic with the heated molten salt composition at a temperature less than 700 °C can produce a product stream that includes liquid hydrocarbons and/or gaseous hydrocarbons. The product stream can be removed from the heated molten salt composition using the flue gas as a sweep gas. Advantageously, the reactor and system can produce liquid and/or gaseous hydrocarbons at temperatures lower than conventional pyoil cracking temperatures; thus, providing for a more energy efficient process.

According to the present invention, waste plastic is converted into a lower boiling hydrocarbon stream. The process can be a batch or continuous process. The process includes heating a molten salt composition by contacting a heated flue gas with the molten salt composition. Contacting the molten salt composition can include dispersing the flue gas into a portion of the molten salt composition. In some aspects, the flue gas flows in a radially outward direction. Flue gas can include nitrogen, carbon dioxide, water, oxides of nitrogen, or any combination thereof. The flue gas can include less than 0.005 vol.% (50 ppm) of oxygen (O₂), preferably less than 0.0025 vol.% (25 ppm) of O₂. A ratio of the molten salt composition to the plastic feed stream can be 5:1 to 20:1. The molten salt composition can include a Group 1 metal hydroxide, a Group 1 metal carbonate, a Group 1 metal chloride, a Group 1 metal nitrate, a Group 2 metal hydroxide, a Group 2 metal carbonate, a Group 2 metal chloride, or a Group 3-13 metal chloride, or a mixture thereof, or a eutectic thereof. A waste plastic feed stream is contacted with the heated molten salt composition and thermally cracked at a temperature from 300 °C to 700 °C to produce a hydrocarbon product stream that includes liquid hydrocarbons, gaseous hydrocarbons, or a mixture thereof. In some aspects, the waste plastic feed stream can be heated to a temperature sufficient to produce a melted (molten) waste plastic feed stream, which can be provided to the molten salt composition. In some aspects, a soluble metal catalyst precursor (e.g., a molybdenum salt preferably molybdenum octoate, molybdenum naphthenate, or a mixture thereof) and a sulfur source (e.g., elemental sulfur, hydrogen sulfide, sulfur containing hydrocarbons, or a mixture thereof) can be added to the waste plastic feed stream, the reactor, the molten salt composition, or a combination thereof. According to the invention, micron-sized MoS₂ is added to the waste plastic feed stream, the reactor, the molten salt composition, or a combination thereof. The heating of the molten salt composition at a temperature of 300 °C to 700 °C can crack (*e.g*., thermally, or catalytically) the waste plastic feed to produce hydrocarbon products that have a lower molecular weight as compared to the waste plastic feed stream prior to contact with the molten salt composition. At least a portion of the heated flue gas can be used to aid in the removal of the liquid and/or gaseous hydrocarbons from the reactor. The waste plastic feed stream can include polymers that have less than 5 wt.% of aromatic hydrocarbons and at least 85 wt.% polyolefins, based on the total weight of the waste plastic feed stream. Non-limiting examples of polyolefins can include polyethylene, polypropylene, or a mixture thereof. The product stream includes hydrocarbons that have 1 to 50 carbon atoms. The gaseous hydrocarbons in the product stream can include hydrocarbons that have 1 to 4 carbon atoms. The liquid hydrocarbons in the product stream have a final boiling point of 500 °C or less, preferably less than 450 °C, more preferably less than 400 °C, and most preferably less than 350 °C. The liquid hydrocarbons can have a carbon number of 5 to 50. In some aspects, the process can include removing a portion of the molten salt composition after thermally cracking the waste plastic feed, filtering the portion of the removed molten salt composition at an elevated temperature to remove solid deposits, and returning the filtered molten salt composition to the process.

In some aspects pertaining to the present invention, reactors used to perform the processes of the present invention are described. A reactor can include a gas dispersion apparatus. The gas dispersion apparatus can include a hollow stirrer shaft coupled to a hollow impeller or a sparger. The gas dispersion apparatus is capable of receiving and dispersing the flue gas into the molten salt composition. The gas dispersion apparatus is capable of delivering small bubbles (*e.g*., micron sized bubbles) to the molten salt composition. In some embodiments, the reactor is a loop reactor with a gas dispersion apparatus.

In other aspects pertaining to the present invention, systems to perform the processes of the present invention are described. A system can include a reactor of the present invention and a distillation train. The reactor can be capable of receiving a molten salt composition, a waste plastic feed stream, and producing a hydrocarbon product stream. The distillation train can be capable of receiving the hydrocarbon product stream and optionally the flue gas stream from the reactor. In some aspects, an extruder can be coupled to the reactor. The extruder can be capable of receiving the waste plastic feed stream, producing a melted waste plastic feed stream, and providing the melted waste plastic feed stream to the reactor. The system can also include a filtration system. The filtration system can be capable of receiving a portion of the molten salt composition from the reactor, filtering the molten salt composition, and providing the filtered molten salt composition to the reactor. In some aspects, a combustion unit can be coupled to the reactor and optionally to the distillation train. The combustion unit can be capable of receiving combustible gas (*e.g*., methane, ethane, propane, butane, natural gas, hydrogen, ammonia, etc.) from a combustible gas source and providing the flue gas stream to the reactor. The flue gas stream can be provided to the gas distribution apparatus (*e.g*., to the hollow stirrer shaft and/or the hollow impeller, or sparger).

In other aspects pertaining to the present invention, systems to perform the processes of the present invention are described. A system can include loop reactor, a combustion unit, and a separator. The loop reactor can be capable of receiving a molten salt composition, a waste plastic feed stream and producing a crude hydrocarbon product stream. The combustion unit can be comprised in the reactor and be capable of receiving combustible gas (*e.g*., methane, ethane, propane, butane, natural gas, hydrogen, ammonia, etc.) from a combustible gas source and providing a hot flue gas stream to the molten salt composition. The separator can be capable of receiving a gaseous stream that includes a portion of the molten salt composition, the crude hydrocarbon product stream and/or a flue gas stream. The separator can separate the molten salt stream from the gaseous stream and return the molten salt stream to the reactor. The separator can also produce a separated gaseous stream that includes the crude hydrocarbon product stream, a flue gas stream, or a combination thereof. The distillation train can be capable of receiving the separated gaseous stream that includes crude hydrocarbon product stream, flue gas stream or a combination thereof and producing a hydrocarbon product stream and/or a flue gas stream. In some aspects, an extruder can be coupled to the reactor. The extruder can be capable of receiving the waste plastic feed stream, producing a melted waste plastic feed stream, and providing the melted waste plastic feed stream to the reactor. The system can also include a filtration system. The filtration system can be capable of receiving a portion of the molten salt composition from the reactor, filtering the molten salt composition, and providing the filtered molten salt composition to the reactor.

Other aspects of the present disclosure are described. In a first aspect, a process for converting waste plastic into a lower boiling hydrocarbon stream, the process comprising: (a) heating a molten salt composition by contacting a heated flue gas with the molten salt composition to produce a heated molten salt composition; and (b) contacting a waste plastic feed stream with the heated molten salt composition at a temperature from 300 °C to 700 °C to produce a hydrocarbon product stream comprising liquid hydrocarbons, gaseous hydrocarbons, or a mixture thereof. Aspect 2 describes the process of aspect 1, wherein at least a portion of the heated flue gas is used to aid in the removal of the product stream from the reactor. Aspect 3 describes the process of any one of aspects 1 or 2, wherein the waste plastic feed stream comprises less than 5 wt.% of aromatic hydrocarbons and greater than 85 wt.% polyolefins, based on the total weight of the waste plastic feed stream. Aspect 4 describes the process of aspect 3, wherein the polyolefins comprise polyethylene, polypropylene, or a mixture thereof and the product stream comprises hydrocarbons having 2 to 40 carbon atoms. Aspect 5 describes the process of any one of aspects 1 to 4, wherein a ratio of the molten salt composition to the waste plastic feed stream is 5:1 to 20:1. Aspect 6 describes the process of any one of aspects 1 to 4, wherein the molten salt composition comprises a Group 1 metal hydroxide, a Group 1 metal carbonate, a Group 1 metal chloride, a Group 1 metal nitrate, a Group 2 metal hydroxide, a Group 2 metal carbonate, a Group 2 metal chloride, or a Group 3-13 metal chloride, or a mixture thereof, or a eutectic mixture thereof. Aspect 7 describes the process of any one of aspects 1 to 6, wherein step (a) and step (b) are performed at a temperature of 300 °C to 700 °C. Aspect 8 describes the process of any one of aspects 1 to 7, wherein the flue gas comprises nitrogen, carbon dioxide, water, or any combination thereof. Aspect 9 describes the process of any one of aspects 1 to 8, wherein the flue gas comprises less than 0.005 vol.% of oxygen (O₂), preferably less than 0.0025 vol.% of O₂. Aspect 10 describes the process of any one of aspects 1 to 9, wherein in step (a) contacting comprises dispersing the flue gas into a portion of the molten salt composition. Aspect 11 describes the process of any one of aspects 1 to 10, further comprising, prior to step (b), heating the waste plastic feed stream to a temperature sufficient to produce a melted waste plastic feed stream. Aspect 12 describes the process of any one of aspects 1 to 11, further comprising adding a metal catalyst to the waste plastic feed stream. Aspect 13 describes the process of aspect 12, wherein the metal catalyst comprises a molybdenum salt preferably molybdenum octoate, molybdenum naphthenate, or a mixture thereof. Aspect 14 describes the process of any one of aspects 1 to 13, further comprising removing a portion of molten salt composition after step (b), filtering the portion of removed molten salt composition to remove solid deposits, and returning the filtered molten salt to step (a). Aspect 15 describes the process of any one of aspects 1 to 14, further comprising continuously performing steps (a) through (b). Aspect 16 describes the process of any one of aspects 1 to 15, wherein the liquid hydrocarbons have a final boiling point of less than 450 °C, preferably less than 400 °C, more preferably less than 350 °C, and most preferably less than 300 °C. Aspect 17 describes the process of any one of aspects 1 to 16, wherein the process is performed in a reactor comprising a gas dispersion apparatus, the gas dispersion apparatus comprising a sparger system and/or a hollow stirrer shaft coupled to a hollow impeller, wherein the flue gas passes through the gas dispersion apparatus into the molten salt composition.

Aspect 18 describes a reactor for performing the process of any one of aspects 1 to 17, the reactor comprising gas dispersion apparatus, the gas dispersion system comprising a sparger system and/or a hollow stirrer shaft coupled to a hollow impeller, wherein the gas dispersion system is capable of receiving and dispersing the flue gas into the molten salt composition.

Aspect 19 describes a system comprising: (a) a reactor of aspect 18, the reactor capable of receiving a molten salt composition, a waste plastic feed stream, and a flue gas stream, and producing a hydrocarbon product stream; and (b) a distillation train coupled to the reactor; the distillation train capable of receiving the hydrocarbon product stream. Aspect 20 describes the system of aspect 19, further comprising an extruder coupled to the reactor, the extruder capable of receiving the waste plastic feed stream, producing a melted waste plastic feed stream, and providing the melted waste plastic feed stream to the reactor. Aspect 21 describes the system of any one of claims 19 and 20, further comprising a filtration system, the filtration system capable of receiving a portion of a used molten salt composition from the reactor, filtering the used molten salt composition, and providing the filtered molten salt composition to the reactor, wherein the used molten salt composition comprises ash. Aspect 22 describes the system of any one of aspects 19 to 21, further comprising a combustion unit coupled to the reactor, the combustion unit capable of producing the flue gas stream and providing the flue gas stream to the reactor. Aspect 23 describes the system of any one of aspects 19 to 22, wherein the flue gas stream is provided to the hollow stirrer shaft or hollow impeller of the reactor. Aspect 24 describes the system of any one of aspects 19 to 23, wherein the flue gas stream is provided to the sparger system of the reactor.

The following includes definitions of various terms and phrases used throughout this specification.

The phrase "molten salt composition" refers to a salt that is a solid at standard temperature and pressure, and liquifies at an elevated temperature.

The phrase "eutectic mixture" refers to a composition (e.g., molten salt composition) that has a melting point lower than the melting point of its individual constituents. For example, a molten salt can include two salts and the melting point of the molten salt eutectic is lower than the melting point of each individual salt.

The phrase "flue gas" refers to a gaseous composition generated from the combustion of a fossil fuel, hydrogen, or ammonia.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight percentage of a component, a volume percentage of a component, or molar percentage of a component, respectively, based on the total weight, the total volume of material, or total moles, which includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The processes, reactors, and systems of the present invention can "comprise," "consist essentially of," or "consist of" particular ingredients, components, compositions, etc. disclosed throughout the specification. With respect to the transitional phrase "consisting essentially of," in one non-limiting aspect, a basic and novel characteristic of the processes, systems, and reactors of the present invention are their abilities to produce liquid and gaseous hydrocarbon products from a waste plastic stream.

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

For a more complete understanding, reference is now made to the following descriptions taken in conjunction with the accompanying drawings, in which:
FIG. 1 is a schematic illustrating the reactor and system used to perform the process of the present invention of converting waste plastic into lower boiling hydrocarbons.
FIG. 2 is a schematic of the hollow shaft and hollow rotating impeller used as a gas distribution apparatus in the reactor shown in FIG. 1.
FIG. 3 is a cross-sectional schematic of the hollow rotating impeller of FIG. 2.
FIG. 4 is an illustration of the reactor in FIG. 1 with a sparger gas distribution apparatus.
FIG. 5 is a schematic illustrating another reactor and system used to perform the process of the present invention of converting waste plastic into lower boiling hydrocarbons.
FIG. 6 is a temperature profile of a comparative example of pyrolysis of high-density polyethylene (HDPE) at 425 °C and 250 psig (1.72 MPa) in the absence of a catalyst.
FIG. 7 is a simulated distillation profile of the liquid obtained from the comparative example of pyrolysis of HDPE at 425 °C and 250 psig in the absence of a catalyst.
FIG. 8 is temperature profile of a comparative example of pyrolysis of pyrolysis of HDPE at 450 °C and 250 psig in the absence of a catalyst.
FIG. 9 is a simulated distillation profile of the liquid obtained from the comparative example of pyrolysis of pyrolysis of HDPE at 450 °C and 250 psig in the absence of a catalyst.
FIG. 10 is a temperature profile of pyrolysis of HDPE at 476 °C and 250 psig in the presence of the molten salt composition.
FIG. 11 is a simulated distillation profile of pyrolysis of HDPE at 476 °C and 250 psig in the presence of the molten salt composition.
FIG. 12 is a temperature profile of an example of pyrolysis of HDPE at 500 °C and 250 psig in the presence of the molten salt composition .
FIG. 13 is a simulated distillation profile an example of pyrolysis of HDPE at 500 °C and 250 psig in the presence of the molten salt composition.
FIG. 14 is a temperature profile of an example of pyrolysis of HDPE at 475 °C and 250 psig in the presence of the molten salt composition.
FIG. 15 is a simulated distillation profile an example of pyrolysis of HDPE at 475 °C and 250 psig in the presence of the molten salt composition.
FIG. 16 is a temperature profile of an example according to the present invention of pyrolysis of HDPE at 475 °C and 250 psig in the presence of the molten salt composition and micron-sized MoS₂.
FIG. 17 is a simulated distillation profile an example according to the present invention of pyrolysis of HDPE at 475 °C and 250 psig in the presence of the molten salt composition and micron-sized MoS₂.
FIG. 18 is a comparison of simulated distillation profiles for one of the comparative examples and the example of the present invention showing the advantages of the present invention.
FIG. 19 are images of the physical nature of the liquids produced for comparative examples of pyrolysis of HDPE in the absence of a molten salt.
FIG. 20 are images of the physical nature of the liquids produced in processes of the present invention to pyrolyze HDPE in the presence of a molten salt or a molten salt and micron-sized MoS₂.

While the invention is susceptible to various modifications and alternative forms, specific embodiments thereof are shown by way of example in the drawings. The drawings may not be to scale.

### DETAILED DESCRIPTION OF THE INVENTION

A discovery has been made that provides a solution to at least one of the problems associated with advanced recycling of waste plastic.

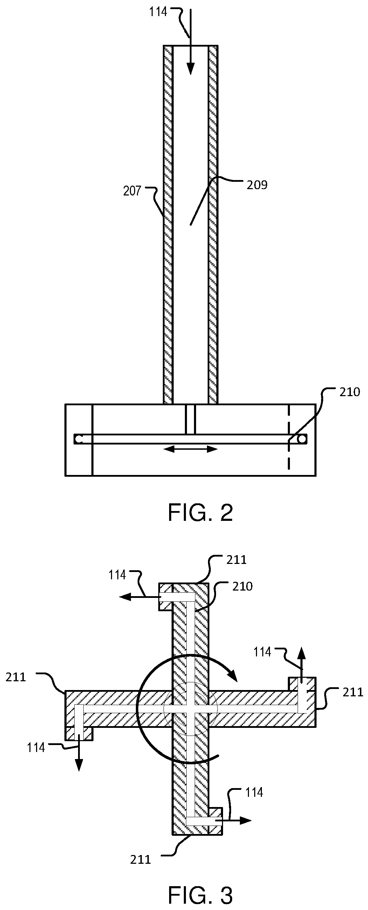

The solution includes a process as defined in the claims, and aspects of a reactor and/or system that converts a waste plastic feed stream into a hydrocarbon stream that has a lower boiling point than the waste plastic feed stream. Advantageously, the reactor is scalable to the amount of waste plastic to be processed. The process can use a molten salt composition as a heat source. A molten salt composition can be heated by direct injection of hot flue gas into the molten salt composition using a gas dispersion apparatus. Contact of the waste plastic with the molten salt composition can crack the waste plastic and produce volatile hydrocarbon liquids and gases, which are recovered into a distillation system where light hydrocarbon gases and multiple liquid streams are recovered. Advantageously heating of the molten salt composition and/or the molten salt composition/molten plastic feed mixture can be controlled by the temperature of the flue gas being mixed with the molten salt and/or molten plastic feed. Yet another advantage is that when the gas dispersion apparatus includes the hollow impeller (See, FIGS. 2 and 3), the mechanical stirrer does not require a large horsepower drive motor but is driven instead by a smaller motor aided by the centrifugal force produced by gas exiting the impeller blade tangentially to the direction of rotation. Once the viscosity of the waste plastic feed stream and/or molten salt viscosity is reduced the motor can be turned off; thus, saving energy. Ash produced from the decomposition of the waste plastic can be recovered by filtration of a recycle stream from the reactor that includes the ash and molten salt from the reactor. A filtered (clean) molten salt composition can be returned to the reactor and the process can be continued.

These and other non-limiting aspects of the present invention are discussed in further detail in the following sections.

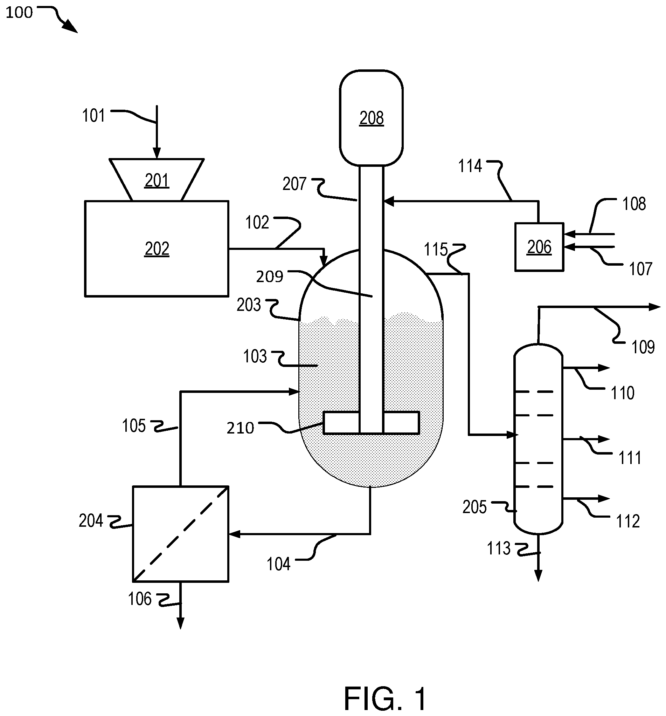

Referring again to FIG. 1, a process of the present invention for converting a waste plastic feed stream to useful hydrocarbons is described. System 100 can include optional packer 201, optional extruder 202, pyrolysis reactor 203, optional filtration unit 204, distillation train 205, and optional combustion unit 206.

Waste plastic feed stream 101 can be introduced into optional packer 201. Waste plastic feed stream can be shredded to reduce its size and remove some solid contaminants prior to being packed. Waste plastic feed stream 101 can include any type of plastic. Non-limiting examples of waste plastic include consumer products (e.g., post-consumer waste and unused consumer products) and industrial products (*e.g*., post-industrial plastic waste, commercial products, medical products, agricultural products, and the like). Non-limiting examples of consumer products, commercial products, medical products can include a packaging product, a pharmaceutical container, a bottle, a cap, a closure, a liner, a trash bag, a food packaging film, a lamination, a pipe, a hose, a fitting, optical fiber cable or a combination thereof. Optical fiber cable can include a polymer sheath, stainless steel reinforcements and glass fibers. In some aspects, the waste plastic can contain a blend of polymers of varying molecular weight. The waste plastic and/or polymers can include monomers, processing aids, and/or additives (e.g., plasticizers, impact modifiers, lubricants, fillers, extenders, antioxidants, stabilizers, rheology modifiers, tackifiers, etc.). Non-limiting examples of polymers include low density polyethylene (LDPE), high density polyethylene (HDPE), linear low-density polyethylene (LLDPE), and polypropylene (PP), polycarbonate, nylon, ABS, polystyrene, polyurethane, polyvinyl chloride, or a mixture thereof. In some embodiments, waste plastic feed stream 101 can be a mixture of waste polyethylene and polypropylene in pellet or regrind form. Non-limiting examples of agricultural products can include an agricultural mulch film and/or a drip tape containing contaminants such as soil, organic debris, and moisture.

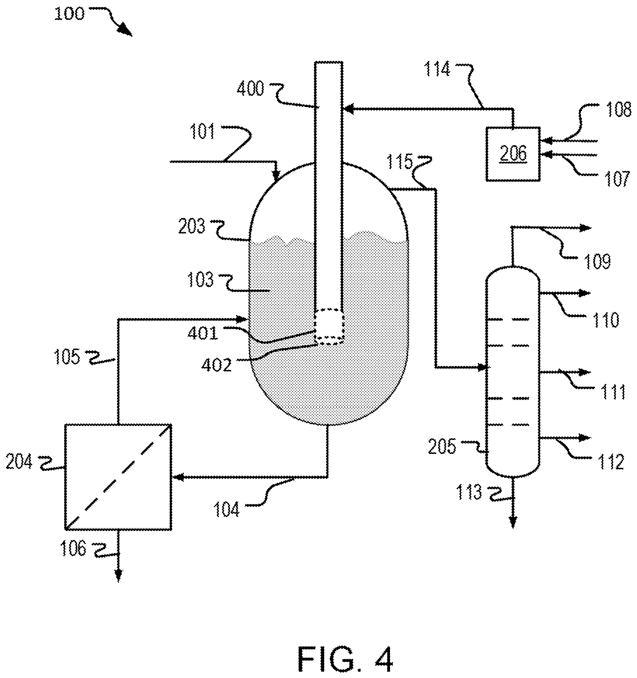

Waste plastic feed stream 101 can enter optional extruder 202. In some aspects, waste plastic feed stream 101 enters pyrolysis reactor 203 directly (Shown in FIG. 4). In optional extruder 202, waste plastic feed stream 101 can be melted to form molten plastic stream 102. Extrusion temperatures can range from 200 °C to 350 °C, for example, 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C or any range or value there between. According to the invention a metal catalyst in the form of micron-sized MoS₂ is added to the molten salt composition. In some aspects, a metal catalyst can be added to the waste plastic feed stream 101 in optional extruder 202. Metal catalysts can include molybdenum salts, cracking catalysts, and the like. Non-limiting examples of molybdenum salts include molybdenum octoate, molybdenum naphthenate, or a mixture thereof. Non-limiting examples of cracking catalysts include ZSM-5, a spent FCC cracking catalyst and the like. The catalyst can also be added to the reactor. The metal catalyst can be soluble in the waste plastic feed. In other aspects, the metal catalyst is slurried with the waste plastic feed.

Molten plastic feed stream (with or without catalyst)102 can exit optional extruder 202 and enter pyrolysis reactor 203. In some aspects, unheated waste feed stream, and molten plastic feed stream both enter pyrolysis reactor 203. Pyrolysis reactor 203 can include molten salt composition 103. Molten salt composition 103 can include a Group 1 metal hydroxide, a Group 1 metal carbonate, a Group 1 metal chloride, a Group 1 metal nitrate, a Group 2 metal hydroxide, a Group 2 metal carbonate, a Group 2 metal chloride, or a Group 3-13 metal chloride, or a mixture thereof, or a eutectic mixture thereof. Non-limiting examples of Group 1 metals can include lithium (Li), sodium (Na), potassium (K), and cesium (Cs). Non-limiting examples of Group 2 metals can include magnesium (Mg), calcium (Ca), and barium (Ba). Non-limiting examples of Group 3-13 metals include aluminum (Al) and zinc (Zn). Non-limiting examples of Group 1 hydroxides can include NaOH, KOH, and mixtures thereof. Non-limiting examples of molten carbonate salts can include Na₂CO₃, K₂CO₃ and Li₂CO₃, or mixtures thereof. Non-limiting examples of molten chloride salts include AlCl₃, LiCl, NaCl, KCI and ZnCl₂, or mixtures thereof. Non-limiting examples of nitrate salts include NaNO₃, KNO₃, and LiNO₃. The molten salt composition to waste plastic feed ratio may vary from about 5:1 to about 20:1, for example, 5:1, 6:1, 7:1, 8:1, 9:1, 10:1, 11:1, 12:1, 13:1, 14:, 15:1, 16:1, 17:1, 18:1, 19:1, 20:1, or any range or value there between. Micron-sized MoS₂ is added to the molten salt composition to promote hydrogen transfer. Micron sized MoS₂ can be obtained from commercial sources. Non-limiting examples of commercial sources are Loudwolf Industrial & Scientific, Sigma Aldrich, Jet-Lube, and the like. In some embodiments, a molybdenum precursor (e.g., a molybdenum salt preferably molybdenum octoate, molybdenum naphthenate, or a mixture thereof) and a sulfur source (e.g., elemental sulfur, hydrogen sulfide, sulfur containing hydrocarbons, or a mixture thereof) can be added to the molten salt composition to produce micron sized MoS₂ in situ. Molten salt composition 103 can be heated to an operating temperature from 300 °C to 700 °C, for example, 300 °C. 325 °C. 350 °C, 375 °C, 400 °C, 425 °C, 450 °C, 475 °C, 500 °C, 525 °C, 550 °C, 575 °C, 600 °C, 625 °C, 650 °C, 675 °C, 700 °C, or any range or value there between prior to, during, and after addition of waste plastic feed stream 101 (heated and/or unheated waste plastic feed stream).

The molten salt composition 103 and the waste plastic feed 101 can be mixed with mechanical stirrer apparatus 207. As shown in FIGS. 1-3, mechanical stirrer apparatus 207 includes hollow shaft 209 and impeller 210 through which hot flue gas 114 is passed. The hollow shaft is fitted with motor 208. Hollow shaft 209 and impeller 210 collectively are a gas dispersion system. In some aspects, motor 208 is used for start-up only. Advantageously, motor 208 can be a motor that has a lower horsepower than conventional motors used to drive commercial reactor's mechanical stirrers due to hollow mixing impeller 210 being self-propelled by the force of the flue gas. Hot flue gas 114 travels through hollow shaft 209 and exits through hollow mixing impeller 210. Hollow mixing impeller can distribute hot flue gas 114 as small bubbles maximizing surface area for heat transfer. Hot flue gas 114 can also act as a sweep gas to remove volatile products. Flue gas 114 can include nitrogen. In some aspects, flue gas stream 114 can include 5 vol. % to 75 vol. % nitrogen and 0.1 vol. % to 75 vol. % gas products from the combustion process (e.g., carbon dioxide, water, non-combusted methane, hydrogen, oxides of nitrogen, or mixtures thereof). For example, flue gas stream 114 can include 5, 10, 15, 20, 25, 30, 35, 40, 45, 50, 55, 60, 65 70, 75 vol.% or any value or range there between of nitrogen and 0.1, 0.5, 1, 5, 10, 15, 20, 25, 30, 35, 40, 45, 50, 55, 60, 65, 70, 75 vol.% and any value or range there between of gas products from the combustion process. As hot flue gas 114 sweeps through the molten salt, the temperature of the flue gas stream can vary. For example, the temperature of the hot flue gas 114 at the entrance of the hollow shaft can be higher than the temperature of product stream 115, which contains flue gas 114, gaseous hydrocarbons, and liquid product.

Referring then to FIGS. 2 and 3, hot flue gas 114 can enter hollow shaft 209 of mechanical stirrer apparatus 207 and travel to impeller 210. Impeller 210 can have a passageway leading from the center to tips 211. As shown, impeller 210 has four tips, but the number of tips can be adjusted to accommodate the size of reactor 203 (e.g., 2, 3, 4, 5, 6, 7, 8 etc.). In tips 211 (FIG. 3), hot flue gas 114 is redirected 90 degrees and generates a rotational force that turns the impeller. Hot flue gas 114 can be expelled from impeller 210 in the form of small bubbles that have high surface area for improved heat transfer. Motor 208 can be used until the salt is fully molten and the viscosity of the molten salt is low enough to allow easy rotation without its use.

Referring to FIG. 4, includes System 100 can include pyrolysis reactor 203, distillation train 205, gas dispersion system 400, optional filtration unit 204, and optional combustion unit 206. As shown, hot flue gas 114 can enter gas dispersion system 400 and be dispersed into molten salt composition 103 through sparger 401. Pyrolysis reactor 203 can include a mechanical stirrer (not shown). In some aspects, a mechanical stirrer is not necessary. In some aspects, hot flue gas 114 can be passed through external heating coils (not shown) on the wall of the reactor prior to being introduced into the reactor liquid through the sparger. Sparger system 401 can be any sparger or multiple spargers that include holes 402 sized such that small bubbles (e.g., micron sized bubbles) are produced to maximize the contact surface area. Sparger systems can be sized using known engineering methodology. In some aspects, reactor 203 also includes mechanical stirrer system 207, thus providing additional flue gas to the molten salt composition.

Referring to FIGS. 1 and 4, as waste plastic feed stream 101 contacts hot molten salt composition 103, the waste plastic feed is heated to a temperature sufficient to thermally and/or catalytically crack the plastic feed and produce liquid and gaseous hydrocarbons having a lower molecular weight than the waste plastic feed stream. Lower molecular weight hydrocarbon products form as a result of thermal or catalytic depolymerization. The temperature of the molten salt composition/waste plastic feed stream (reaction mixture) can be from 300 °C to 700 °C, for example, 300 °C, 325 °C, 350 °C, 375 °C, 400 °C, 425 °C, 450 °C, 475 °C, 500 °C, 525 °C, 550 °C, 575 °C, 600 °C, 625 °C, 650 °C, 675 °C, 700 °C, or all ranges or values there between. The temperature can be controlled by controlling the temperature of hot flue gas 114 as it enters reactor 203. In some embodiments, the temperature of the reaction mixture can be from 400 °C to 500 °C (for example, 400 °C, 425 °C, 450 °C, 475 °C, 500 °C or any range or value therebetween) to minimize gas formation and produce a more liquid hydrocarbon products. In certain embodiments, the temperature of the reaction mixture is maintained at 600 °C to 700 °C (for example, 600 °C, 625 °C, 650 °C, 675 °C, 700 °C, or all ranges or values there between) to maximize gas (e.g., ethylene and propylene) formation and produce a lighter liquid product.

The lower molecular weight hydrocarbons and flue gas 114 can exit pyrolysis reactor 203 as product stream 115 and enter distillation train 205. Distillation train 205 can include one or more distillation columns and heat exchangers. In distillation train 205, product stream 115 can be separated into liquid and gases streams. Liquid streams can include hydrocarbons. Non-limiting examples of liquid hydrocarbons include hydrocarbons having a carbon number of greater than C₅ and/or a boiling range from 80 °C to 800 °C or greater. Liquid streams recovered from distillation train 205 can include naphtha stream 110, distillate stream 111, vacuum gas oil stream 112, and vacuum residual oil stream 113. Gaseous components 109 in product stream 115 can include flue gas 114 and gaseous hydrocarbons. Non-limiting examples of gaseous hydrocarbons can include C₁-C₄ hydrocarbons. Gaseous components 109 can exit the distillation train and can be flared, stored, transported, used in other processes, or a combination thereof.

In some embodiments, flue gas 114 can be generated off-site, or onsite. Flue gas 114 can be generated by combustion of auxiliary fuel 108 with combustion source 107 in combustion unit 206. Auxiliary fuel 108 can include methane (CH₄), ethane (C₂H₆), propane (C₃H₈), butanes (C₄H₁₀), natural gas, hydrogen (H₂), ammonia (NH₃), or mixtures thereof. A portion of gaseous components stream 109 may be mixed with auxiliary fuel 108. In combustion unit 206, auxiliary fuel or a mixture of auxiliary fuel and gaseous stream 109 can be combusted with a combustion source (e.g., air and/or oxygen). When oxygen is used or is present, an excess of auxiliary fuel 108 is used, thereby ensuring an oxygen-free (e.g., less than 0.005 vol% O₂, preferably 0.0025 vol.% O₂, more preferably O₂ is not detected) flue gas product. The amount of oxygen can be determined using stoichiometric chemical methods. An oxygen free flue gas inhibits formation of unwanted by-products in the molten salt composition/waste plastic reaction mixture. In some embodiments, when an excess of hydrogen gas is used in auxiliary fuel 108, the excess hydrogen (H₂) can act as a sweep gas as well as participate in the bond breaking reactions to cap free radicals and stabilize intermediate products.

In some embodiments, a solid residue (*e.g*., ash) can be produced during the thermal cracking reaction. In addition, waste plastic feed stream 101 can include solid inorganic contaminants (*e.g*., soil, fillers and other non-volatile or nonreactive materials). These contaminants can be removed from the reactor 203 by removing slip stream 104 from the reactor. Slip stream 104 can include the reactor contents (*e.g*., molten salt composition, solid residue, unreacted waste plastic). Slip stream 104 can enter optional filtration system 204, which can include an external ceramic or metal filter. In filtration system 204, insoluble material 106 (*e.g.,* ash and organic contaminates) can be separated from slip stream 104 and discarded. Filtered stream 105 containing molten salt can be returned to reactor 203. Filtered stream can also include unreacted waste plastic.

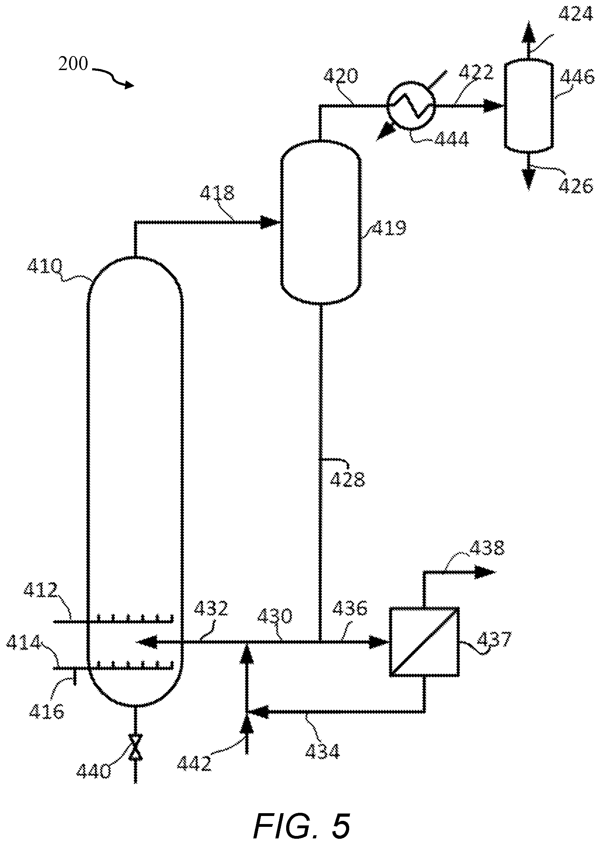

Referring to FIG. 5, system 200 of the present invention is described. System 200 includes loop reactor 410 (e.g., a jet-loop reactor) designed to process waste plastic. For example, using the process of the present invention in system 200, 5,000 metric tons per year (5 KTA) of waste plastic can be converted to lower boiling materials. In one aspect, loop reactor 410 can have approximate dimensions of 2.2 ft diameter and 14.8 ft height (67.1 cm diameter and 451.1 cm height). A molten salt composition as described in this Specification (e.g., molten salt composition 103) can be loaded into loop reactor 410 either as a solid or in liquid form. For example, 5,400 lb (2,455 kg) of a eutectic mixture (a salt mixture) that includes 42.6 wt% NaOH and 57.4 wt% KOH (melting point 170 °C) can be loaded through a hatch at the top of the reactor (not shown). In another example, the salt mixture can enter loop reactor 410 in liquid form (e.g., at a temperature of 250 °C). In optional aspects, loop reactor 410 can be heated via external heating elements to 250 °C to melt the salt mixture or maintain them in liquid form. Once the molten salt mixture is molten, hydrogen gas (H₂) can be introduced through line 416 and air through line 414 into a sparger tube. For example, as a H₂:O₂ molar ratio of 2.1:1.0, 3.0:1.0, 3.5:1.0, 4.0:1.0, 4.5:1.0, or 5.0:1.0 or any range or value there between. The H₂:O₂ stoichiometric ratio of 2.0:1.0 is necessary for complete combustion, so that the specified ratios greater than 2.0:1.0 can be used to produce an excess of hydrogen and ensure complete consumption of all oxygen in the air. The two gases can be combined in burner jets and ignited in situ to produce a direct flame heat source. The flame temperature can be regulated by the fuel to air ratio and the amount of heat transferred by the gas flow rates. Combustion gases (e.g., steam (H₂O), excess H₂ and N₂) from the air rise through the molten mixture and continue to heat the salt mixture until it forms a molten salt composition. Inertial rise of gases can initiate a circulation of the molten salt composition which exits, along with the gases through line 418 into separator 419. In separator 419, all gaseous products can be removed through line 420 and passed through heat exchanger 444. Non-volatile salts can pass through lines 428, 430 and 432 and be recirculated to loop reactor 410. A slip stream of the molten salt composition can be removed through line 436 for cleanup using a high temperature ceramic or metallic membrane filtration system 437 during processing of plastic feed steams. Filtered molten salt composition can be returned to the reactor through line 434 and make-up molten salt composition or salt mixture may be added through line 442 as needed. Premixed catalyst of the same composition can be added with make-up feed through line 442.

This procedure can be followed until the reactor set point temperature (typically 400 °C to 600 °C, or 400 °C, 425 °C, 450 °C, 475 °C, 500 °C, 525 °C, 550 °C, 575 °C, or 600 °C, or any value or range there between) is reached and the molten salt composition (e.g., molten salt composition 103 not shown) is flowing smoothly around the loop. At that point melted waste plastic feed stream, (e.g., polyolefins melted in an extruder) can be introduced through line 412 and flow upward through the heated molten salt composition bed. As the waste plastic feed reacts it can produce volatile species (e.g., a crude hydrocarbon stream) which can be swept upward by the molten salt composition and combustion gases and exit reactor 410 through line 418. After disengaging from the molten salt composition in separator 419, the volatile products (e.g., flue gases and/or a hydrocarbon product stream) can be recovered through line 420 and pass through condenser 444 into knockout pot 446. Liquid product can be collected through line 426 along with steam condensate. Non-volatile gases can be collected through line 424. The non-condensable gases which may contain hydrocarbon products including methane, ethane, ethylene, propane, propylene, butane and butenes, can used to produce process heat for the system, as necessary.

In some embodiments, waste plastic feed material can be melted in an extruder or other similar equipment (not shown) and introduced into reactor 410 through line 412. For example, at 15 to 25 lb/min (6.8 Kg/min to 11.33 Kg/min or any value or range there between), or 20 lb/min (9 Kg/min) a calculated residence time in system 200 can be 30 minutes. Thus, a total feed rate of 600 lb (272.15 Kg) in 30 minutes can result in a feed concentration in molten salt of 11 wt%.

Micron-sized MoS₂ is used as a catalyst in the molten salt composition to aid in hydrogen transfer from liquid molecules or residual hydrogen gas in the vapor phase to free radicals produced during reaction. A catalyst concentrate of micron-sized molybdenum sulfide (MoS₂) can be prepared in a separate vessel (not shown) and added to loop reactor 410 through line 442.

Micron-sized MoS₂ can be prepared using known procedures See for example, U.S. Patent No. 4,134,825 to Bearden, Jr. et al. and U.S. Patent No. 11,130,919 to Schucker et al. In one aspect, a molybdenum source (e.g., molybdenum octanoate), elemental sulfur, and a eutectic mixture can be combined to form a mixture. A weight percent of the MoS₂ to eutectic mixture can be 0.1 wt.% to 2.0 wt.%, or 0.1 wt.%, 0.25 wt.%, 0.5 wt.%, 0.75 wt.%, 1 wt.%, 1.25 wt.%, 1.50 wt.%, 1.75 wt.%, or 2 wt.% or any value or range there between. The mixture can be heated to 325 °C to 375 °C, or 325 °C, 330 °C, 335 °C, 340 °C, 345 °C, 350 °C, 355 °C, 360 °C, 365 °C, 370 °C, or 375 °C or any range or value there between. at atmospheric pressure with a sweep of inert gas (e.g., UHP N₂ 20 cm³/min). After a desired amount of time (e.g., 20 to 60 minutes, or 20, 30, 40, 50, or 60 or any value or range there between), the sweep can be stopped and the mixture can be cooled. The crude liquid (e.g., purple liquid) can be recovered in addition to an unmeasured amount of gas resulting from the decomposition of Mo octoate. Distilled water can be added to dissolve the salts; and produce an ultra-fine MoS₂ suspended in the water. The ultra-fine MoS₂ can be separated from the solution using known separation techniques (e.g., filtration, centrifugation and the like). The ultra-fine MoS₂ can have a size of 0.5 to 2.0 microns or 0.5, 0.75, 1.0, 1.25, 1.5, 1.75, or 2 microns or any range or value there between.

The processing units and/or reactor of Systems 100 and 200 can include one or more heating and/or cooling devices (*e.g*., insulation, electrical heaters, jacketed heat exchangers in the wall) unless otherwise specified, and/or controllers (*e.g.,* computers, flow valves, automated values, *etc.*) that can be used to control the reaction temperature and pressure of the reaction mixture. While only one reactor is shown, it should be understood that multiple reactors can be housed in one unit or a plurality of reactors housed in one unit. For the catalytic version of this process, pressure in the reactor is maintained at up to 500 psig in order to make dissolved hydrogen available for the stabilization of free radicals produced during reaction and enhance the alkane yield of products.

The product stream of the present invention produced by the process of the present invention includes hydrocarbons that have 1 to 50 carbon atoms, or 1, 2, 3, 4, 5, 6, 7, 8, 9, 10, 11, 12, 13, 14, 15, 16, 17, 18, 19, 20, 21, 22, 23, 24, 25, 26, 28, 29, 30, 31, 32, 33, 34, 35, 36, 37, 38, 39, 40, 41, 42, 43, 44, 45, 46, 47, 48, 49, or 50 or any value or range there between. The gaseous hydrocarbons in the product stream can include hydrocarbons that have 1 to 4 carbon atoms, or 1, 2, 3, or 4 carbon atoms or any range or value there between. The liquid hydrocarbons in the product stream have a final boiling point of 500 °C or less, preferably 450 °C or less, more preferably 350 °C or less, and most preferably 300 °C or less, or 95 °C to 500 °C, or 95 °C, 100 °C, 125 C, 150 °C, 175 °C, 200 °C, 225 °C, 250 °C, 275 °C, 300 °C, 325 °C, 350 °C, 375 °C, 400 °C, 425 °C, 450 °C, 475 °C, or 500 °C, or any range or value there between. The liquid hydrocarbons can have a carbon number of 5 to 50, or 5, 6, 7, 8, 9, 10, 11, 12, 13, 14, 15, 16, 17, 18, 19, 20, 21, 22, 23, 24, 25, 26, 28, 29, 30, 31, 32, 33, 34, 35, 36, 37, 38, 39, 40, 41, 42, 43, 44, 45, 46, 47, 48, 49, or 50 or any value or range there between.

### EXAMPLES

The present invention will be described in greater detail by way of specific examples. The following examples are offered for illustrative purposes only and are not intended to limit the invention in any manner. Those of skill in the art will readily recognize a variety of noncritical parameters which can be changed or modified to yield essentially the same results.

In the examples, the pressure unit "psi" can be converted into MPa by dividing it by 145.038.

### Comparative Examples

The following comparative examples illustrate the pyrolysis of polyolefins like high density polyethylene (HDPE) as performed commercially using batch reactors at the time of this filing. All runs were carried out in a Parr Model 4560300 cc Mini Bench Top stainless-steel reactor equipped with a variable speed, magnetically-stirred impeller. Automatic control of the temperature in the reactor was performed using a Parr 4848 Reactor Controller. Ultra-high purity (UHP) nitrogen was used to purge oxygen from the reactor headspace before each run; and pressure (maximum of 600 psig) was controlled manually by venting the reactor through an outlet metering valve into a cold trap maintained at 0 °C.

### Comparative Example 1

### (Pyrolysis of HDPE at 425 °C and 250 psig in the absence of a molten salt)

Into the 300 mL reactor body was weighed 50.0 gm 100% pure high-density polyethylene (HDPE) pellets. A tared cold trap was mounted on the reactor exit; and the trap was maintained at 0 °C using an ice bath. The reactor body was mounted in place with a high temperature graphite gasket and the closure was torqued to 15 ft-lb (20.33 Joules) followed by 25 ft-lb (33.99 Joules) to seal. A pressure test showed that the system was gas-tight. The reactor was then sequentially pressurized to 90 psig (about 0.621 MPa) with UHP nitrogen three times after each of which the pressure was released through the cold trap in order to reduce the level of oxygen in the reactor. After the last pressure release, the pressure in the reactor was reduced to 10 psig (about 0.0689 MPa) and the exit valve closed.

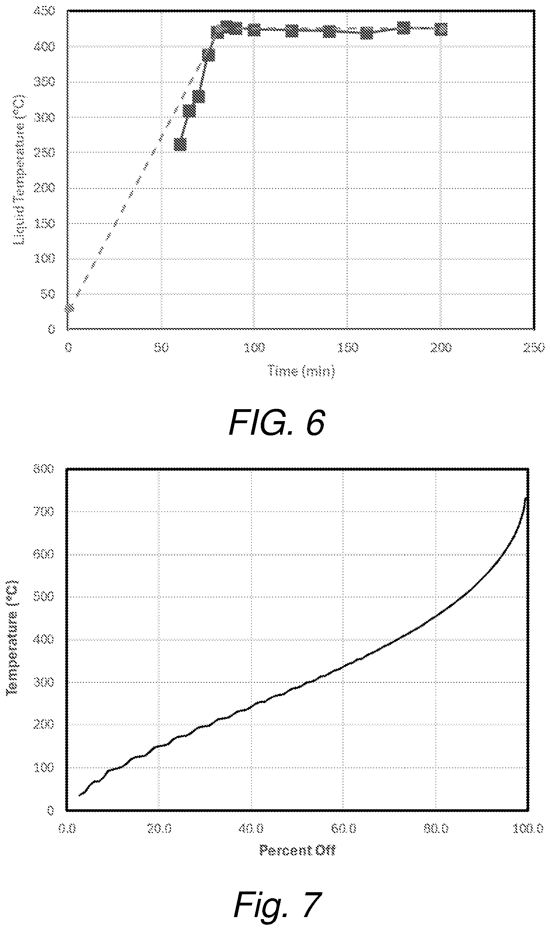

The reactor was heated at 5 °C/min to 425 °C and held at 425 °C for 2 hours prior to being shut down. The temperature profile for this run is shown in FIG. 6 and illustrates the difficulty in controlling temperature for a solid polymer up to its melting point and beyond because of the poor thermal conductivity of molten polymers. The dashed line represents the heating program applied to this run. During the run pressure increased and was maintained between 250 and 300 psig by manual venting. The reactor was vented only once (at 180 min) to 250 psig to maintain the desired pressure; and the small amount of liquid collected in the cold trap was added to the reactor contents after cooling to create a composite sample.

Total liquid collected from this run was determined gravimetrically to be 44.0 gm resulting in an 88 wt% yield of a dark brown liquid. Essentially no solids remained in the reactor resulting in an estimated gas yield of 12 wt%.

Simulated Distillation (ASTM D2887) was carried out on this sample and gave the results shown in FIG. 7. As can be seen, 28% of this sample had a boiling point over 400 °C and the final boiling point (FBP) for this sample was 733 °C. This sample had molecules with up 108 carbons indicating a very heavy sample.

### Comparative Example 2

### (Pyrolysis of HDPE at 450 °C and 250 psig in the absence of a molten salt)

Into the 300 mL reactor body was weighed 50.0 gm 100% pure high-density polyethylene (HDPE) pellets. A tared cold trap was mounted on the reactor exit; and the trap was maintained at 0 °C using an ice bath. The reactor was mounted in place with a high temperature graphite gasket and the closure was torqued to 15 ft-lb (20.33 Joules) followed by 25 ft-lb (33.99 Joules) to seal. A pressure test showed that the system was gas-tight. The reactor was then sequentially pressurized to 90 psig with UHP nitrogen three times after each of which the pressure was released through the cold trap in order to reduce the level of oxygen in the reactor. After the last pressure release, the pressure in the reactor was reduced to 10 psig and the exit valve closed.

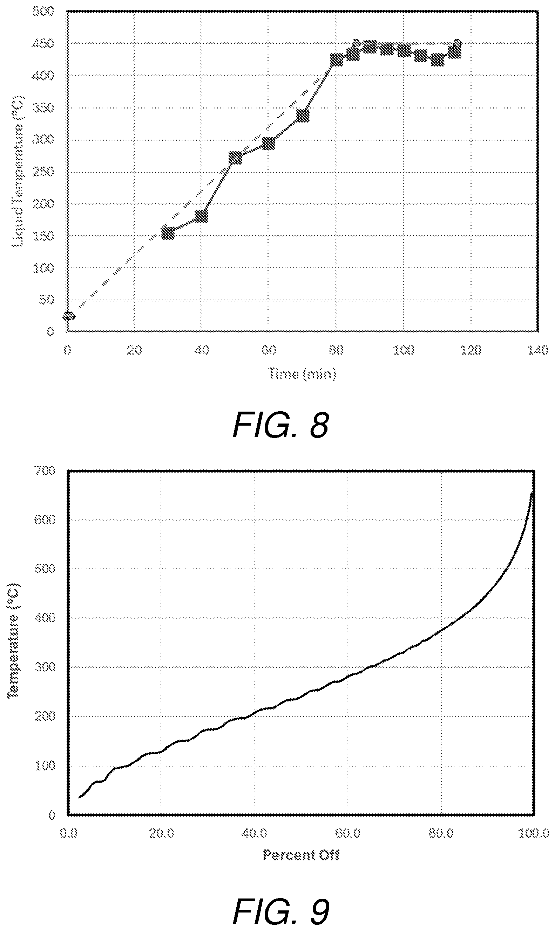

The reactor was heated at 5 °C/min to 450 °C and held at 450 °C for 30 minutes prior to being shut down. The temperature profile for this run is shown in FIG. 8 and illustrates the difficulty in controlling temperature for a solid polymer up to its melting point and beyond because of the poor thermal conductivity of a molten polymer. The dashed line represents the heating program applied to this run. During the run pressure increased and was maintained between 250 and 300 psig by manual venting. To maintain this pressure the reactor was vented to 250 psig at 105 min and 115 min; and the liquid collected in the cold trap was added to the reactor contents after cooling to create a composite sample.

Total liquid collected from this run was determined gravimetrically to be 44.5 gm resulting in an 89 wt% yield of a dark brown liquid. Essentially no solids remained in the reactor resulting in an estimated gas yield of 11 wt%.

Simulated Distillation (ASTM D2887) was carried out on this sample and gave the results shown in FIG. 9. As can be seen, 16% of this sample has a boiling point over 400 °C, indicating that operating at the higher temperature (450 °C vs 425 °C) converted more feed to lower molecular weight species. The FBP for this sample was 655 °C. This sample had molecules with up to 100 carbons.

### Examples

The following examples are further provided. Because in the batch Comparative Examples 1 and 2, vapor could not be continuously removed from the reactor (as it would not be possible to determine and actually control the temperature during the entire run), all of the Comparative Examples were done as batch experiments. In the present invention (as it would be practiced commercially) the molten salt, heated directly by injection of hot combustion gases, provides a continuous phase with high thermal conductivity in which the plastic is suspended; and, because the combustion gases contain both nitrogen (from the combustion air) and steam (product of combustion) which can sweep products from the reactor, it is possible to carry out reactive distillation and remove distillate to minimize over-reaction. This supports a continuous flow operation in a loop configuration rather than a batch operation, as polymer can be continuously added to the molten salt as distillate is removed, thus significantly increasing the overall productivity of this system of the present invention. It also eliminates the need for post-distillation of pyrolysis oil product, thus decreasing the capital cost of the system.

### Example 1

### (Pyrolysis of HDPE at 476 °C and 250 psig in the presence of molten salt)

Into the 300 mL reactor body was weighed 57.5 gm NaOH and 77.5 gm KOH (a known eutectic mixture with a melting point of 170 °C) followed by 15.0 gm of 100% pure high-density polyethylene (HDPE) pellets (reactant) yielding a 10.0 wt% HDPE in molten salt mixture. A tared cold trap was mounted on the reactor exit and the trap was maintained at 0 °C using an ice bath. The reactor was mounted in place with a graphite gasket and torqued to 15 ft-lb (20.33 Joules) followed by 25 ft-lb (33.99 Joules). A pressure test showed that the system was gas-tight. The reactor was then sequentially pressurized 90 psig with UHP nitrogen three times after each of which the pressure was released through the cold trap in order to reduce the level of oxygen in the reactor. After the last pressure release, the pressure in the reactor was 10 psig.

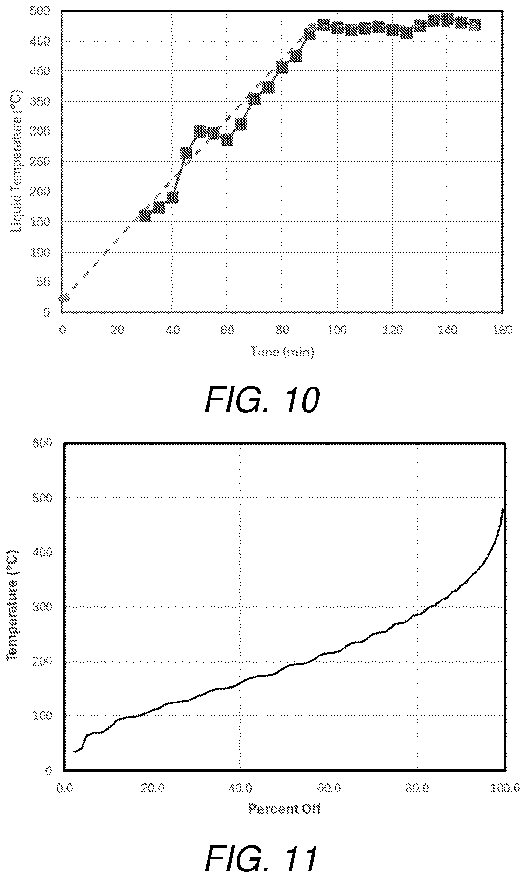

The reactor was heated at 5 °C/min to 475 °C and held at 475 °C until the pressure no longer increased, indicating that all the reactant had been consumed (approximately 60 minutes). The temperature profile for this run is shown in FIG. 10. The dashed line represents the heating program applied to this run. During the run pressure increased and was maintained between 250 and 300 psig by manual venting. To maintain this pressure the reactor was vented to 250 psig, as necessary.

At the end of the run the cold trap was removed and was found to contain both a small amount of water (from the salt components) and a light-yellow distillate. After separating the water, the distillate was measured to be 11.7 gm resulting in a liquid yield of 78.3 wt%. When the reactor had cooled to 100 °C, 150 cc distilled water were added with stirring to dissolve the salt. After the reactor contents had cooled, the liquid solution was removed and filtered. A minimal amount of solids (< 0.1 gm or 0.7 wt%) were obtained, allowing a reasonable estimate of the gas yield as 21.0 wt%.

Simulated Distillation (ASTM D2887) was carried out on this sample and gave the results shown in FIG 11. As can be seen, only 3.5 % of the sample boils above 400 °C and only 17% boils above 300 °C making this an ideal feed for steam cracking. The FBP for this sample was 480 °C, 175 °C lower than in Comparative Example 2. Unlike the comparative examples, this sample had a maximum carbon number of only 44.

### Example 2

### (Pyrolysis of HDPE at 500 °C and 250 psig in the presence of molten salt)

Into the 300 mL reactor body was weighed 57.5 gm NaOH and 77.5 gm KOH (a known eutectic mixture with a melting point of 170 °C) followed by 15.0 gm of 100% pure high-density polyethylene (HDPE) pellets (reactant) yielding a 10.0 wt% HDPE in molten salt mixture. A tared cold trap was mounted on the reactor exit and the trap was maintained at 0 °C using an ice bath. The reactor was mounted in place with a graphite gasket and torqued to 15 ft-lb (20.33 Joules) followed by 25 ft-lb (33.99 Joules). A pressure test showed that the system was gas-tight. The reactor was then sequentially pressurized 90 psig with UHP nitrogen three times after each of which the pressure was released through the cold trap in order to reduce the level of oxygen in the reactor. After the last pressure release, the pressure in the reactor was 10 psig.

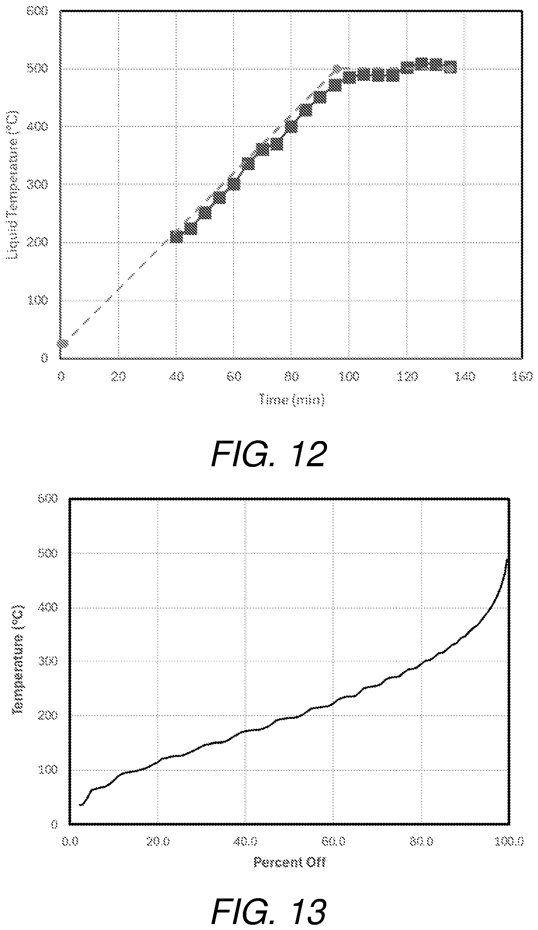

The reactor was heated at 5 °C/min to 500 °C and held at 500 °C until the pressure no longer increased, indicating that all the reactant had been consumed (approximately 35 minutes). The temperature profile for this run is shown in FIG. 12. The dashed line represents the heating program applied to this run. During the run pressure increased and was maintained between 250 and 300 psig by manual venting. To maintain this pressure the reactor was vented to 250 psig, as necessary.

At the end of the run the cold trap was removed and was found to contain both a small amount of water (from the salt components) and a light-yellow distillate. After separating the water, the distillate was measured to be 12.32 gm resulting in a liquid yield of 82.1 wt%. When the reactor had cooled to 100 °C, 150 cc distilled water were added with stirring to dissolve the salt. After the reactor contents had cooled, this liquid solution in water removed and filtered. A minimal amount of solids (< 0.1 gm or 0.7 wt%) were obtained, allowing a reasonable estimate of the gas yield as 17.2 wt%.

Simulated Distillation (ASTM D2887) was carried out on this sample and gave the results shown in FIG. 13. As can be seen, 3 % of this product boils above 400 °C and 19 % boils above 300 °C. The final boiling point for this sample was 488 °C. This sample also had a maximum carbon number of 44.

### Example 3

### (Pyrolysis of HDPE at 475 °C and 250 psig in the presence of molten salt)

Into the 300 mL reactor body was weighed 41.72 gm KCI and 793.29 gm ZnCl₂ (a known eutectic mixture with a melting point of 230 °C) followed by 15.0 gm of 100% pure high-density polyethylene (HDPE) pellets (reactant) yielding a 10.0 wt% HDPE in molten salt mixture. A tared cold trap was mounted on the reactor exit and the trap was maintained at 0 °C using an ice bath. The reactor was mounted in place with a graphite gasket and torqued to 15 ft-lb (20.33 Joules) followed by 25 ft-lb (33.99 Joules). A pressure test showed that the system was gas-tight. The reactor was then sequentially pressurized 90 psig with UHP nitrogen three times after each of which the pressure was released through the cold trap in order to reduce the level of oxygen in the reactor. After the last pressure release, the pressure in the reactor was reduced to 10 psig.

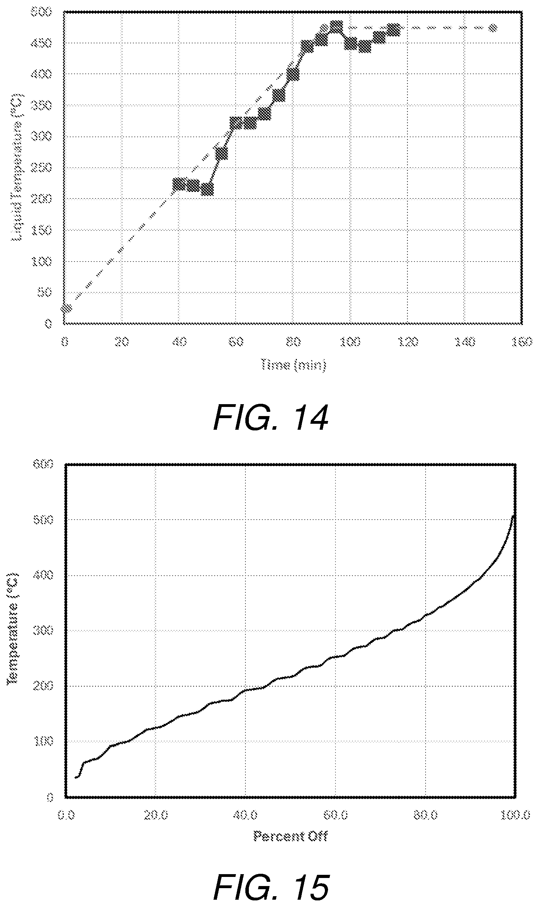

The reactor was heated at 5 °C/min to 475 °C and held at 475 °C until the pressure no longer increased indicating that all the reactant had been consumed (approximately 25 minutes). The temperature profile for this run is shown in FIG. 14. The dashed line represents the heating program applied to this run. During the run pressure increased and was maintained between 250 and 300 psig by manual venting. To maintain this pressure the reactor was vented to 250 psig, as necessary. It should be noted that pressure began to increase at a much lower temperature with this salt mixture and the run was essentially over just after the set point temperature was reached.

At the end of the run the cold trap was removed and was found to contain both a small amount of water (from the salt components) and a yellow-orange distillate. After separating the water, the distillate was measured to be 12.16 gm resulting in a liquid yield of 81.1 wt%. When the reactor had cooled to 100 °C, 150 cc distilled water were added with stirring to dissolve the salt. After the reactor contents had cooled, they were removed and filtered. A minimal amount of solids (< 0.1 gm or 0.7 wt%) were obtained, allowing a reasonable estimate of the gas yield as 18.2 wt%.

Simulated Distillation (ASTM D2887) was carried out on this sample and gave the results shown in FIG. 15. As can be seen, 7 % of this product liquid boils above 400 °C and 27 % boils above 300 °C. The FBP for this sample was 508 °C. This sample also had a maximum carbon number of 44.

### Example 4

### (Preparation of micron-sized MoS₂)

This example illustrates the preparation of a micron-sized MoS₂ catalyst in a molten salt for improved hydrogen transfer during pyrolysis.

Into the 300 mL reactor body was weighed 57.5 gm NaOH, 77.5 gm KOH, 48 gm Mo octoate (0.078 mole Mo, Shepherd Chemical Company containing 15.5 wt% Mo) and 5.0 gm elemental sulfur (0.156 mole S). The reactor was closed and heated to 350 °C at atmospheric pressure with a 20 cm³/min sweep of UHP N₂ through the cold trap. At the end of 30 minutes, the sweep was stopped and the system cooled down. Approximately 13 gm of a purple liquid was recovered in addition to an unmeasured amount of gas resulting from the decomposition of Mo octoate. Distilled water was added to dissolve the salts; and an ultra-fine black suspension was observed in the water. Samples were centrifuged to recover the solid, which was micron sized MoS₂.

### Example 5 according to the invention

### (Pyrolysis of HDPE at 475 °C and 250 psig in the presence of molten salt and micron-sized MoS₂)

Into the 300 ml reactor body was weighed 57.5 gm NaOH and 77.5 gm KOH (a known eutectic mixture with a melting point of 170 °C) followed by 9.7 gm Mo octoate (0.016 mole Mo), 1.00 gm elemental sulfur (0.032 mole S) and 15.0 gm of 100% pure high-density polyethylene (HDPE) pellets (reactant) yielding a 10.0 wt% HDPE in molten salt mixture. Total finished catalyst was 2.5 gm or 17 wt% on polymer. A cold trap was mounted on the reactor exit and maintained at 0 °C using an ice bath. The reactor was mounted in place with a graphite gasket and torqued to 15 ft-lb (20.33 Joules) followed by 25 ft-lb (33.99 Joules). A pressure test showed that the system was gas-tight. The reactor was then sequentially pressurized 90 psig with UHP nitrogen three times after each of which the pressure was released through the cold trap in order to reduce the level of oxygen in the reactor. After the last pressure release, the pressure in the reactor was reduced to 10 psig.

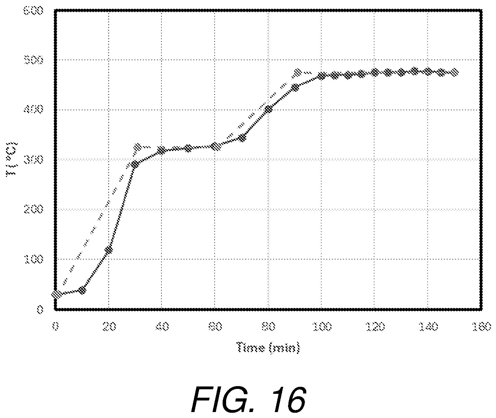

The heating program and procedure used for this run were different from previous runs. The outlet valve was closed and the reactor was heated at 10 °C/min to 325 °C and held at 325 °C until the pressure no longer increased indicating that all Mo octoate had reacted to form the catalyst after which the reactor was vented to remove all of the reaction product from Mo octoate decomposition (no HDPE reaction occurs at this low temperature) and the reactor was then flushed with UHP N₂ again at temperature. The exit valve was again closed and a new tared cold trap put into place. The reactor was heated from 325 °C to 475 °C at 5 °C/min and held at 475 °C with venting to maintain the pressure between 250 and 300 psig until the pressure no longer increased indicating that all the polymer reactant had been consumed. The temperature profile for this run is shown in FIG. 16. The dashed line represents the heating program applied to this run. The average temperature during this run during the final hold period was 475 °C.

At the end of the run the cold trap was removed and was found to contain only a very light-yellow distillate which was measured to be 12.39 gm resulting in a liquid yield of 82.6 wt%. When the reactor had cooled to 100 °C, 150 mL of distilled water was added with stirring to dissolve the salt. After cooling, the reactor contents were removed and filtered to recover the catalyst. No apparent coke was formed and the gas yield was estimated to be 17.4 wt%. The liquid product was very light yellow and clear.

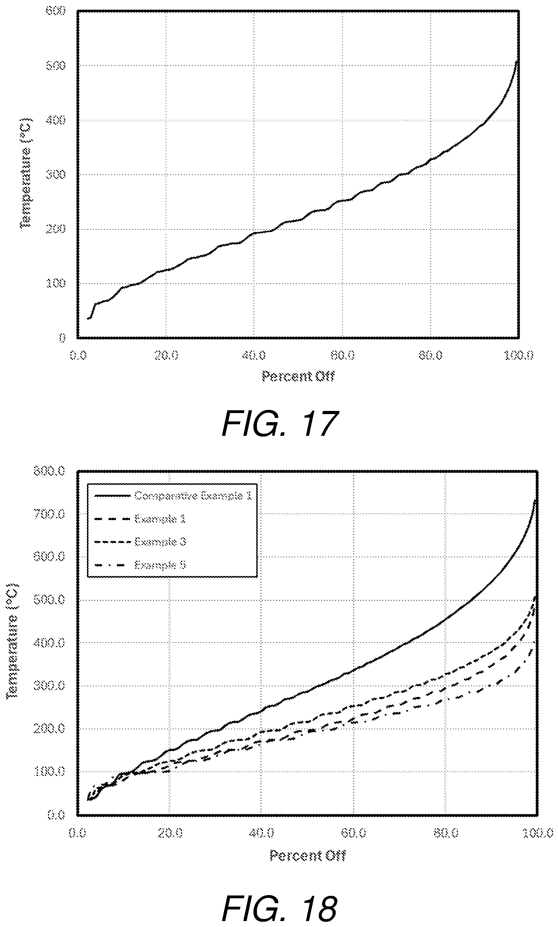

Simulated Distillation (ASTM D2887) was carried out on this distillate sample and the results are shown in FIG. 17. From the data, it was determined that virtually all of this product had a boiling point below 400 °C and only 10% boils above 300 °C. The FBP for this sample was 410 °C. This sample had a maximum carbon number of only 32. FIG. 18 is a comparison of simulated distillation profiles for one of the comparative examples (comparative Example 1), for the Example 1 and 3 as well as for the Example 5 according to the invention showing the advantages of the present invention.

Examples 1, 2, 3 and 5 demonstrate the pyrolysis of plastic feedstocks in molten salts with continuous removal of distillate product.

### Example 6

### (Heating of molten salts with a direct flame)

Approximately 3.09 gm KCl and 6.91 gm ZnCl₂ were added to a quartz beaker without any prior homogenization and heated with a direct natural gas flame. The mixture melted and formed a low viscosity clear liquid (a molten salt), confirming that a direct flame could be used to heat molten salts. The theoretical melting point of this eutectic mixture is 230 °C indicating that the molten salt formed easily without pre-mixing and quickly attained a temperature equal to or greater than 230 °C.

### Example 7

### (Heating of molten salts with a direct flame)

Approximately 4.26 gm NaOH and 5.74 gm KOH were added to a quartz beaker without any prior homogenization and heated with a direct natural gas flame. The mixture melted and formed a low viscosity clear liquid (a molten salt) confirming that a direct flame could be used to heat molten salts. The theoretical melting point of this eutectic mixture is 170 °C indicating that the molten salt formed easily without pre-mixing and was at a temperature equal to or greater than 170 °C.

In Examples 6 and 7 the salts were added as individual solids; and full mixing occurred only after heating. However, for ease of commercial operation, there may be a need to add make-up salt to the reactor as a homogeneous mixture in water; and all of these materials are readily soluble in water. Due to the elevated temperature of the reactor, the water in a make-up stream would flash off from the make-up salt mixture and produce steam which would act as additional stripping agent for volatile reaction products. So, in this next example, the salts were first dissolved in distilled water.

### Example 8

### (Heating of molten salts with a direct flame in the presence of water)

Approximately 0.81 gm NaCl, 3.13 gm KCl and 6.06 gm ZnCl₂ (10.0 gm total) were added to a 100 ml quartz beaker. To that was added 20.0 gm distilled water, and the salts were totally dissolved producing a clear solution comprising approximately 33 wt% salt. This was placed in a preheated oven at 204 °C to evaporate the water. Since the known melting point of this eutectic mixture is 229 °C, the salt mixture was not expected to be molten at this temperature; although it was observed that at 204 °C, there was some liquid phase present. Weight of the salt after drying was found to be 10.19 gm; meaning that it still contained 1.9 wt % water.

This homogeneous salt mixture containing this small amount of water was then slowly exposed to an open natural gas flame. The mixture vented the remainder of the water and melted to form a low viscosity clear liquid (a molten salt) confirming that a direct flame could be used to heat molten salts. The theoretical melting point of this eutectic mixture is 229 °C, indicating that the molten salt in the beaker was at a temperature equal to or greater than 229 °C.

Examples 6, 7 and 8 demonstrate the direct heating of molten salt mixtures with a flame and resulting combustion gases for more efficient heat transfer.

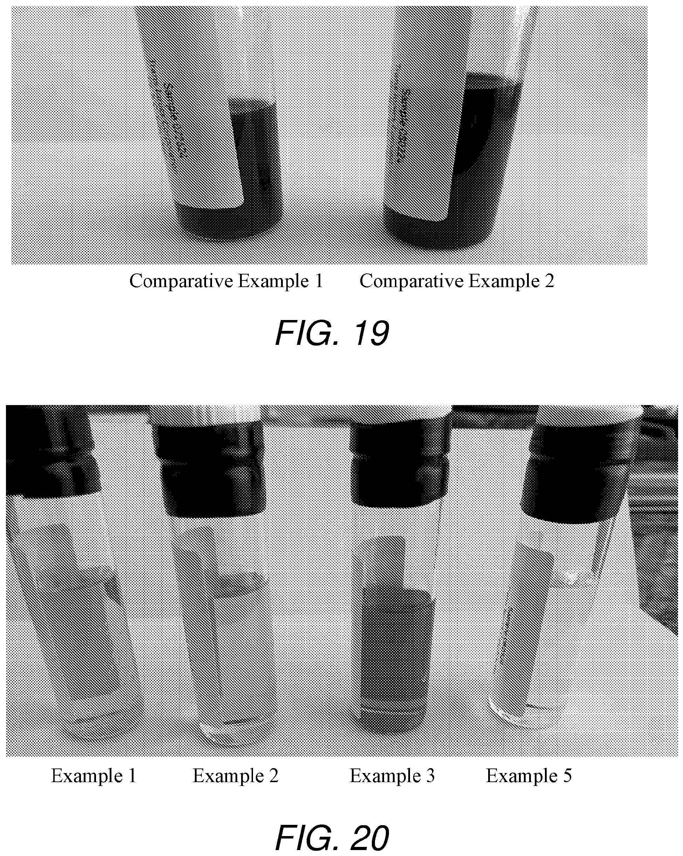

FIGS. 19 and 20 shows images of the physical nature of the liquids produced for Comparative Examples 1 and 2 (FIG. 19) and Inventive Examples 1, 2, 3, and 5 (FIG. 20). For Comparative Examples 1 and 2 the dark brown liquids represent the entire yield from the batch runs and for Examples 1, 2, 3 and 5, the clear, low viscosity liquids shown also represent the total liquid yield and not distillation cuts, illustrating that the present invention can eliminate a distillation train on the back end of this process.

## Claims

1. A process for converting waste plastic into a lower boiling hydrocarbon stream, the process comprising:
(a) heating a molten salt composition by contacting a heated flue gas with the molten salt composition to produce a heated molten salt composition; and
(b) contacting a waste plastic feed stream with the heated molten salt composition and a metal catalyst being a micron-sized molybdenum disulfide MoS₂ at a temperature from 300 °C to 700 °C and a pressure up to 500 psig (3.4 MPa) to produce a hydrocarbon product stream including hydrocarbons that have 1 to 50 carbon atoms, and wherein the hydrocarbon product stream comprises liquid hydrocarbons having a final boiling point of 500 °C or less, gaseous hydrocarbons, or a mixture thereof, wherein the hydrocarbon product stream has a lower boiling point than the waste plastic feed stream, and
wherein the heated flue gas aids in removal of the product stream from the heated molten salt composition.

2. The process of claim 1, wherein the waste plastic feed stream comprises less than 5 wt.% of aromatic hydrocarbons and greater than 85 wt.% polyolefins, based on the total weight of the waste plastic feed stream, and/or wherein the polyolefins comprise polyethylene, polypropylene, or a mixture thereof and the product stream comprises hydrocarbons having 2 to 40 carbon atoms.

3. The process of any one of claims 1 or 2, wherein a ratio of the molten salt composition to the waste plastic feed stream is 5:1 to 20:1 and/or wherein the molten salt composition comprises a Group 1 metal hydroxide, a Group 1 metal carbonate, a Group 1 metal chloride, a Group 2 metal hydroxide, a Group 2 metal carbonate, a Group 2 metal chloride, or a Group 3-13 metal chloride, or a mixture thereof, or a eutectic mixture thereof.

4. The process of any one of claims 1 or 2, wherein the micron-sized molybdenum disulfide MoS₂ is prepared prior to step (b) by adding a molybdenum salt, preferably molybdenum octoate, molybdenum naphthenate, or a mixture thereof, and a sulfur source comprising elemental sulfur, hydrogen sulfide, sulfur containing hydrocarbons, or a mixture thereof to the waste plastic composition.

5. The process of any one of claims 1 or 2, wherein step (a) and step (b) are performed at a temperature of 300 °C to 700 °C

6. The process of any one of claims 1 or 2, wherein the flue gas comprises nitrogen, carbon dioxide, water, oxides of nitrogen, or any combination thereof and/or wherein the flue gas comprises less than 0.005 vol.% of oxygen (O₂), preferably less than 0.0025 vol.% of O₂.

7. The process of claim 1, wherein in step (a) contacting comprises dispersing the flue gas into a portion of the molten salt composition.

8. The process of any one of claims 1 or 2, further comprising:
prior to step (b), heating the waste plastic feed stream to a temperature sufficient to produce a melted waste plastic feed stream;
removing a portion of molten salt composition after step (b), filtering the portion of removed molten salt composition to remove solid deposits, and returning the filtered molten salt to step (a);
continuously performing steps (a) through (b); or
a combination thereof.

9. The process of any one of claims 1 or 2, wherein the liquid hydrocarbons have a final boiling point of less than 450 °C, preferably less than 400 °C, and more preferably less than 350 °C.

10. The process of claim 1, wherein the process is performed in a reactor comprising a gas dispersion apparatus, the gas dispersion apparatus comprising a sparger system, wherein the flue gas is a sweep gas generated in situ by combusting air and hydrogen in burner jets to produce a direct flame heat source and passed through the gas dispersion apparatus into the molten salt composition, and wherein the flue gas passes through the gas dispersion apparatus into the molten salt composition.

11. The process of claim 10, wherein the heated flue gas initiates circulation of the molten salt composition.

## Patentansprüche

1. Verfahren zur Umwandlung von Kunststoffabfall in einen niedriger siedenden Kohlenwasserstoffstrom, wobei bei dem Verfahren:
(a) eine Salzschmelzenzusammensetzung durch Inkontaktbringen eines erhitzten Rauchgases mit der Salzschmelzenzusammensetzung erhitzt wird, um eine erhitzte Salzschmelzenzusammensetzung zu erzeugen, und
(b) ein Kunststoffabfall-Einsatzmaterialstrom mit der erhitzten Salzschmelzenzusammensetzung und Metallkatalysator, der ein mikrometergroßes Molybdändisulfid MoS₂ ist, bei einer Temperatur von 300 °C bis 700 °C und einem Druck von bis zu 500 psig (3,4 MPa) in Kontakt gebracht wird, um einen Kohlenwasserstoff-Produktstrom zu erzeugen, der Kohlenwasserstoffe einschließt, die 1 bis 50 Kohlenstoffatome aufweisen, und wobei der Kohlenwasserstoff-Produktstrom flüssige Kohlenwasserstoffe, die einen Endsiedepunkt von 500 °C oder weniger aufweisen, gasförmige Kohlenwasserstoffe oder eine Mischung davon umfasst, wobei der Kohlenwasserstoff-Produktstrom einen niedrigeren Siedepunkt aufweist als der Kunststoffabfall-Einsatzmaterialstrom, und
wobei das erhitzte Rauchgas die Entfernung des Produktstroms aus der erhitzten Salzschmelzenzusammensetzung unterstützt.

2. Verfahren nach Anspruch 1, bei dem der Kunststoffabfall-Einsatzmaterialstrom weniger als 5 Gew.-% aromatische Kohlenwasserstoffe und mehr als 85 Gew.-% Polyolefine umfasst, bezogen auf das Gesamtgewicht des Kunststoffabfall-Einsatzmaterialstroms, und/oder wobei die Polyolefine Polyethylen, Polypropylen oder eine Mischung davon umfassen und der Produktstrom Kohlenwasserstoffe umfasst, die 2 bis 40 Kohlenstoffatome aufweisen.

3. Verfahren nach einem der Ansprüche 1 oder 2, bei dem ein Verhältnis der Salzschmelzenzusammensetzung zu dem Kunststoffabfall-Einsatzmaterialstrom 5:1 bis 20:1 beträgt und/oder wobei die Salzschmelzenzusammensetzung ein Metallhydroxid der Gruppe 1, ein Metallcarbonat der Gruppe 1, ein Metallchlorid der Gruppe 1, ein Metallhydroxid der Gruppe 2, ein Metallcarbonat der Gruppe 2, ein Metallchlorid der Gruppe 2 oder ein Metallchlorid der Gruppe 3 bis 13 oder eine Mischung davon oder eine eutektische Mischung davon umfasst.

4. Verfahren nach einem der Ansprüche 1 oder 2, bei dem das mikrometergroße Molybdändisulfid MoS₂ vor Schritt (b) hergestellt wird, indem ein Molybdänsalz, vorzugsweise Molybdänoctoat, Molybdännaphthenat oder eine Mischung davon, und eine Schwefelquelle, die elementaren Schwefel, Schwefelwasserstoff, schwefelhaltige Kohlenwasserstoffe oder eine Mischung davon umfasst, zu der Kunststoffabfallzusammensetzung zugegeben werden.

5. Verfahren nach einem der Ansprüche 1 oder 2, bei dem Schritt (a) und Schritt (b) bei einer Temperatur von 300 °C bis 700 °C durchgeführt werden.

6. Verfahren nach einem der Ansprüche 1 oder 2, bei dem das Rauchgas Stickstoff, Kohlendioxid, Wasser, Stickoxide oder eine beliebige Kombination davon umfasst und/oder wobei das Rauchgas weniger als 0,005 Vol.-% Sauerstoff (O₂), vorzugsweise weniger als 0,0025 Vol.-% O₂, umfasst.

7. Verfahren nach Anspruch 1, wobei bei dem Inkontaktbringen in Schritt (a) das Rauchgas in einen Teil der Salzschmelzenzusammensetzung verteilt wird.

8. Verfahren nach einem der Ansprüche 1 oder 2, bei dem ferner:
vor Schritt (b) der Kunststoffabfall-Einsatzmaterialstrom auf eine Temperatur erhitzt wird, die ausreicht, um einen geschmolzenen Kunststoffabfall-Einsatzmaterialstrom zu erzeugen,
ein Teil der Salzschmelzenzusammensetzung nach Schritt (b) entfernt wird, der entfernte Teil der Salzschmelzenzusammensetzung filtriert wird, um feste Ablagerungen zu entfernen, und die gefilterte Salzschmelze zu Schritt (a) zurückgeführt wird,
die Schritte (a) bis (b) kontinuierlich durchgeführt werden, oder
eine Kombination davon.

9. Verfahren nach einem der Ansprüche 1 oder 2, bei dem die flüssigen Kohlenwasserstoffe einen Endsiedepunkt von weniger als 450 °C, vorzugsweise weniger als 400 °C, und besonders bevorzugt weniger als 350 °C aufweisen.

10. Verfahren nach Anspruch 1, bei dem das Verfahren in einem Reaktor durchgeführt wird, der eine Gasverteilungsvorrichtung umfasst, wobei die Gasverteilungsvorrichtung ein Sprühsystem umfasst, wobei das Rauchgas ein Spülgas ist, das in situ durch Verbrennen von Luft und Wasserstoff in Brennerdüsen generiert wird, um eine direkte Flammenwärmequelle zu erzeugen, und durch die Gasverteilungsvorrichtung in die Salzschmelzenzusammensetzung geleitet wird, und wobei das Rauchgas durch die Gasverteilungsvorrichtung in die Salzschmelzenzusammensetzung geleitet wird.

11. Verfahren nach Anspruch 10, bei dem das erhitzte Rauchgas die Zirkulation der Salzschmelzenzusammensetzung initiiert.

## Revendications

1. Procédé pour convertir des déchets plastiques en un flux d'hydrocarbures à faible ébullition, le procédé comportant :
(a) le chauffage d'une composition de sel fondu par mise en contact d'un gaz de combustion chauffé avec la composition de sel fondu pour produire une composition de sel fondu chauffée ; et
(b) la mise en contact d'un flux d'alimentation de déchets plastiques avec la composition de sel fondu chauffé et un catalyseur métallique qui est un disulfure de molybdène MoS₂ de taille micrométrique à une température de 300 °C à 700 °C et une pression allant jusqu'à 500 psig (3,4 MPa) pour produire un flux de produit hydrocarboné comprenant des hydrocarbures qui présentent 1 à 50 atomes de carbone, et dans lequel le flux de produit hydrocarboné comporte des hydrocarbures liquides ayant un point d'ébullition final de 500 °C ou moins, des hydrocarbures gazeux, ou un mélange de ceux-ci, dans lequel le flux de produit hydrocarboné a un point d'ébullition plus bas que le flux d'alimentation en déchets plastiques, et
dans lequel le gaz de combustion chauffé aide à éliminer le flux de produit de la composition de sel fondu chauffée.

2. Procédé selon la revendication 1, dans lequel le flux d'alimentation en déchets plastiques comporte moins de 5 % en poids d'hydrocarbures aromatiques et plus de 85 % en poids de polyoléfines, sur la base du poids total du flux d'alimentation en déchets plastiques, et/ou dans lequel les polyoléfines comportent du polyéthylène, du polypropylène ou un mélange de ceux-ci et le flux de produit comporte des hydrocarbures présentant 2 à 40 atomes de carbone.

3. Procédé selon l'une quelconque des revendications 1 ou 2, dans lequel un rapport de la composition de sel fondu sur le flux d'alimentation de déchets plastiques est de 5:1 à 20:1 et/ou dans lequel la composition de sel fondu comporte un hydroxyde métallique du groupe 1, un carbonate métallique du groupe 1, un chlorure métallique du groupe 1, un hydroxyde métallique du groupe 2, un carbonate métallique du groupe 2, un chlorure métallique du groupe 2 ou un chlorure métallique du groupe 3-13, ou un mélange de ceux-ci, ou un mélange eutectique de ceux-ci.

4. Procédé selon l'une quelconque des revendications 1 ou 2, dans lequel le disulfure de molybdène MoS₂ de taille micrométrique est préparé avant l'étape (b) en ajoutant un sel de molybdène, de préférence de l'octoate de molybdène, du naphténate de molybdène, ou un mélange de ceux-ci, et une source de soufre comportant du soufre élémentaire, du sulfure d'hydrogène, du soufre contenant des hydrocarbures, ou un mélange de ceux-ci à la composition de déchets plastiques.

5. Procédé selon l'une quelconque des revendications 1 ou 2, dans lequel l'étape (a) et l'étape (b) sont réalisées à une température de 300 °C à 700 °C.

6. Procédé selon l'une quelconque des revendications 1 ou 2, dans lequel le gaz de combustion comporte de l'azote, du dioxyde de carbone, de l'eau, des oxydes d'azote, ou toute combinaison de ceux-ci et/ou dans lequel le gaz de combustion comporte moins de 0,005 % en volume d'oxygène (O₂), de préférence moins de 0,0025 % en volume d'O₂.

7. Procédé selon la revendication 1, dans lequel à l'étape (a) la mise en contact comporte la dispersion du gaz de combustion dans une partie de la composition de sel fondu.

8. Procédé selon l'une quelconque des revendications 1 ou 2, comportant en outre :
avant l'étape (b), le chauffage du flux d'alimentation de déchets plastiques à une température suffisante pour produire un flux d'alimentation de déchets plastiques fondus ;
l'élimination d'une partie de la composition de sel fondu après l'étape (b), le filtrage de la partie de la composition de sel fondu éliminée pour éliminer les dépôts solides, et le retour du sel fondu filtré à l'étape (a) ;
la réalisation continue des étapes (a) à (b) ; ou
une combinaison de celles-ci.

9. Procédé selon l'une quelconque des revendications 1 ou 2, dans lequel les hydrocarbures liquides ont un point d'ébullition final inférieur à 450 °C, de préférence inférieur à 400 °C, et plus préférentiellement inférieur à 350 °C.

10. Procédé selon la revendication 1, dans lequel le procédé est réalisé dans un réacteur comportant un appareil de dispersion de gaz, l'appareil de dispersion de gaz comportant un système d'arroseur, dans lequel le gaz de combustion est un gaz de balayage généré in situ par combustion d'air et d'hydrogène dans des jets de brûleur pour produire une source de chaleur à flamme directe et passé à travers l'appareil de dispersion de gaz dans la composition de sel fondu, et dans lequel le gaz de combustion passe à travers l'appareil de dispersion de gaz dans la composition de sel fondu.

11. Procédé selon la revendication 10, dans lequel le gaz de combustion chauffé initie la circulation de la composition de sel fondu.
